# EUROPEAN PATENT SPECIFICATION

(11) **EP 3 490 398 B1**
(45) Date of publication and mention of the grant of the patent: **04.09.2024**
(21) Application number: 17835287.8
(22) Date of filing: 27.07.2017
(51) Int. Cl.: A41G 5/02, A41G 5/00, A45D 2/48

(54) **METHOD OF APPLYING A SET OF LASH EXTENSIONS**
VERFAHREN ZUM ANWENDEN EINE REIHE VON WIMPERVERLÄNGERUNGEN
MÉTHODE POUR APPLIQUER UN ENSEMBLE D'EXTENSIONS DE CILS

(30) Priority: 28.07.2016 US 201662368116 P
(43) Date of publication of application: 05.06.2019
(60) Divisional application: 21185294.2
(73) Proprietor: Lashify, Inc., North Hollywood, CA 91601 (US)
(72) Inventor: LOTTI, Sahara, North Hollywood, California 91601 (US)
(74) Representative: Marks & Clerk LLP
(86) International application number: PCT/US2017/044217
(87) International publication number: WO 2018/022914

(56) References cited:
- US-A- 3 900 038
- US-A1- 2003 005 941
- US-A1- 2005 061 341
- US-A1- 2005 061 341
- US-A1- 2007 227 550
- US-A1- 2009 217 939
- US-A1- 2010 170 526
- US-A1- 2015 136 162
- US-B2- 8 596 284
- US-B2- 8 596 284

## Description

### FIELD OF THE INVENTION

Various embodiments concern artificial eyelashes and, more specifically, clusters of artificial eyelash extensions that can be applied to the underside of an individual's natural eyelashes.

### BACKGROUND

Eyelash extensions have conventionally been used to enhance the length, thickness, and fullness of natural eyelashes. Eyelash extensions, however, must be applied to an individual's natural eyelashes one by one to avoid having the eyelash extensions stick together. Consequently, lash extension services can cost hundreds of dollars depending on the type and number of lashes used, the skill of the cosmetician, and the venue where the eyelash extensions are applied. It usually takes an experienced cosmetician one to two hours to attach a full set of eyelash extensions.

Clusters of artificial lashes have conventionally been used to enhance the length, thickness, and fullness of an individual's natural eyelashes. However, each cluster must be applied to the individual's eyelashes individually in order to avoid having the clusters of artificial lashes stick together and to ensure multiple clusters are evenly distributed across the width of the individual's lash line.

Alternatively, false eyelashes may be applied directly to an individual's eyelid. False eyelashes come in strips (and thus may also be referred to as "strip lashes") that can be trimmed to fit the width of the individual's eyelid. While a strip of false eyelashes can be applied in a single motion, false eyelashes are easily distinguishable from the individual's natural eyelashes and may be uncomfortable when worn for extended periods of time. US 2007/227550 A1 describes a self-adhesive artificial eyelash unit attaches to a subject wearer's existing natural eyelashes to modify their appearance. The unit is preferably applied as a set of units to opposite sides of a wearer's natural eyelash. Each unit includes an array of artificial lash hairs each lash hair having a base and a tip, the hairs aligned in the array with their bases in a substantially common direction: a support strip having an adhesive-receiving surface and a leading edge, the strip made of polyurethane and having the bases of the hairs of the array of artificial lash hairs embedded in the polyurethane of the leading edge of the support strip; and an adhesive disposed on the adhesive-receiving surface of the support strip, the adhesive releaseably attachable to the existing natural eyelashes of the wearer to provide for cosmetically altering the appearance of the wearer's natural eyelashes. US 8 596 284 B2 describes a method of adorning an eyelash of a wearer (the wearer having an eyelid with a natural lash line containing natural eyelashes) includes providing at least first and second lash subassemblies. Each lash subassembly includes an elongated mounting portion and a plurality of elongated lash filaments. Each lash filament has a filament base and an oppositely disposed filament tip. The filament base is attached to the mounting portion with the filament tip extending from the mounting portion. The first and second lash subassemblies are concurrently affixed to the eyelid. When concurrently affixed to the eyelid, the first and second lash subassemblies collectively provide a different appearance of the plurality of elongated lash filaments of the first lash subassembly than an appearance collectively provided by the plurality of elongated lash filaments of the second lash subassembly. US 2003/005941 A1 describes a A false eyelash for removable application to the eyelash of a wearer includes an adornment support structure for removably adhering to the wearer eyelash upper surfaces, wearer eyelash lower surfaces or wearer eyelash upper and lower surfaces, and supporting an adornment structure such as natural or simulated feathers, butterfly wings, or flower pedals. US 2005/061341 A1 describes false eyelashes for attachment to the edge of an eyelid. The false eyelashes include a plurality of lashes arranged in a curved state; and an attachment section formed by applying an adhesive to one end of the lashes, the attachment section being formed such that the lashes are not knotted together at the attachment section. A plurality of the false eyelashes are applied to the edge of an eyelid of each eye.

### STATEMENT OF THE INVENTION

According to an aspect of the invention there is provided a method of applying a set of lash extensions to a subject as set forth in claim 1.

### BRIEF DESCRIPTION OF THE DRAWINGS

Various embodiments are illustrated by way of example and not limitation in the accompanying drawings, in which like references indicate similar elements. Various objects, features, and characteristics of the present invention will become more apparent to those skilled in the art from a study of the Detailed Description in conjunction with the accompanying drawings.
**FIG. 1** depicts the upper tightline, upper lash line, and upper waterline of an eyelid.
**FIG. 2** depicts clusters of artificial lashes that can be used by professional lash technicians and cosmeticians.
**FIG. 3A** depicts how multiple clusters of artificial lashes can be connected to form a bundle (also referred to as a "lash fusion").
**FIG. 3B** is a side view of two different styles of lash fusion.
**FIG. 3C** illustrates how a set of multiple lash fusions can be secured to an individual's lashline in a single motion.
**FIG. 4** illustrates how multiple lash fusions within a set can be positioned in a specified arrangement.
**FIG. 5** depicts how the arrangement of the set of lash extensions enables all of the lash fusions to be simultaneously grasped by an applicator.
**FIG. 6** depicts how the set of lash fusions can be placed underneath an individual's natural lashes, where the plastic represents the individual's eyelid.
**FIG. 7** depicts how an adhesive can be applied to the top of an entire set of lash extensions or to the lash fusions that make up the set.
**FIG. 8** depicts a flow diagram of a process for manufacturing a lash fusion including multiple clusters of artificial lashes.
**FIG. 9** depicts a flow diagram of a process for applying a set of lash extensions to an individual's natural eyelashes.

The figures depict various embodiments for the purpose of illustration only. Those skilled in the art will readily recognize that alternative embodiments may be employed without departing from the principles of the present invention. The claimed subject matter is intended to cover all modifications, equivalents, and alternatives falling within the scope of the present invention as defined by the appended claims.

### DETAILED DESCRIPTION

Conventional eyelash extensions (or simply "lash extensions") are individually adhered to an individual's eyelashes one-by-one in order to prevent the eyelash extensions from sticking together. However, because the average individual might have anywhere from thirty to eighty lashes per eye, the application process can take several hours to attach a full set of eyelash extensions.

Introduced here, therefore, are techniques for creating clusters of artificial lash extensions that can be applied to an individual's natural eyelashes. Clusters of artificial lashes include multiple artificial hairs made of natural materials (e.g., silk or authentic mink hair) or synthetic materials (e.g., acrylic resin, polybutylene terephthalate (PBT), or synthetic mink hair made of polyester). A cluster of artificial lashes generally includes approximately 10 to 30 artificial hairs (and preferably 10 to 20 artificial hairs). Clusters of artificial lashes are initially formed using, for example, a hot melt method in which artificial lashes are heated. For example, in some embodiments linear artificial lashes are heated at one end such that they begin to fuse to one another at that end, while in other embodiments linear artificial lashes are heated near a central point and folded underneath one another. Clusters of artificial lashes have conventionally been made available only to professional lash technicians and cosmeticians.

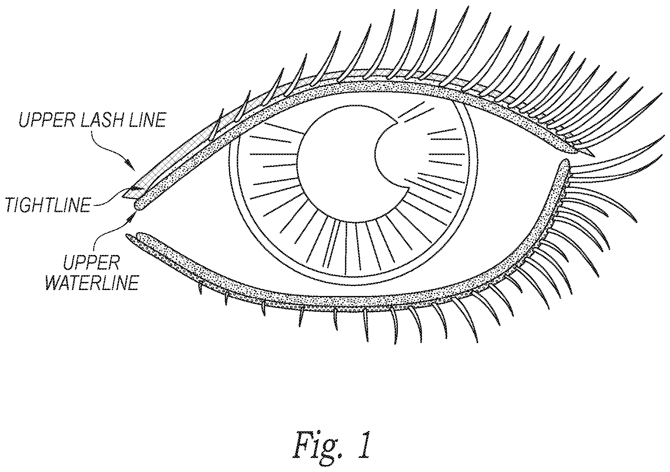

Multiple clusters can then be fused together to form a bundle (also referred to as a "lash fusion") that can be applied along the upper tightline in a single motion. As shown in **FIG. 1****,** the upper tightline is interposed between the upper lash line and the upper waterline. While certain embodiments have been described in the context of lash fusions that include multiple clusters, those skilled in the art will recognize that a lash fusion could also include a series of individual artificial hairs that are connected to one another.

More specifically, a lash fusion can include multiple clusters that are fused together near the inner ends of the artificial lashes (also referred to as the "base" of the lash fusion) to form a straight line of artificial hairs that can be placed underneath an individual's natural lashes. For example, the multiple clusters can be fused together (e.g., via a heat seal process) approximately 1-5 millimeters (mm) above the base via crisscrossing artificial hairs. In some embodiments, the multiple clusters are fused together approximately 1.5-2.5 mm above the base. The distance from the base at which fusing occurs may depend on the desired fan-out of the artificial lashes (e.g., shorter distances may cause a larger fan-out). Adjacent clusters can be secured to one another when the intersecting portions of the crisscrossing artificial hairs are fused together. Such a technique allows a set of multiple lash fusions to appear seamless and blend in with an individual's natural lashes.

The base of the lash fusion (i.e., where the multiple clusters are fused together) is intended to be affixed to an individual's natural lashes. The lash fusion may be approximately 4-8 mm wide. A lash fusion could include 3-10, 3-7, 5-10, 5-7, or 4-6 clusters. Accordingly, a lash fusion could include 30-150, 30-120, or 30-90 individual artificial hairs.

A set of multiple lash fusions can then be formed by arranging the multiple lash fusions next to one another in a form that matches the curvature of the upper tightline along the base of an eyelid. While the multiple lash fusions are typically not connected to one another (e.g., are not fused together using heat, an adhesive, etc.), the entire set can be applied to the underside of the individual's natural lashes in a single motion. A set could include 3-8, 3-5, 5-8, or 4-6 lash fusions. Accordingly, a set could include 150-360 individual artificial hairs.

The number of lash fusions in a set may vary. In fact, because the multiple lash fusions are typically not secured to one another, an individual could decide to apply part of a set (e.g., five lash fusions rather than six lash fusions) based on the desired density.

Density of the artificial hairs may vary across the width of the eyelid. In some embodiments the artificial hairs are distributed evenly across the entire tightline (i.e., each cluster/lash fusion can include a substantially similar number of artificial lashes), while in other embodiments the artificial hairs are more densely populated in certain area(s) of the tightline (i.e., some clusters/lash fusions may include fewer artificial lashes than others). For example, density may be lower along the outer edge opposite the tear duct.

An adhesive may be applied to the top of each lash fusion within a set during the manufacturing process, which enables an individual to easily apply the set of lash fusions directly to the underside of the individual's eyelashes rather than to the individual's eyelid. Additionally or alternatively, the individual could apply an adhesive before applying the set of lash fusions to the individual's natural eyelashes. For example, the individual may apply an adhesive to the set of lash fusions before applying the set of lash fusions to the natural eyelashes. As another example, the individual could apply an adhesive directly to the natural eyelashes. The adhesive could be a waterproof glue or mascara.

### Terminology

Brief definitions of terms, abbreviations, and phrases used throughout this application are given below.

Reference to "one embodiment" or "an embodiment" means that a particular feature, structure, or characteristic described in connection with the embodiment is included in at least one embodiment of the disclosure. The appearances of the phrase "in some embodiments" are not necessarily referring to the same embodiment, nor are they necessarily referring to separate or alternative embodiments that are mutually exclusive of one another.

The terms "connected," "coupled," or any variant thereof includes any connection or coupling between two or more elements, either direct or indirect. The coupling or connection between the elements can be physical, logical, or a combination thereof. For example, two components may be coupled directly to one another or via one or more intermediary channels/components. The words "associate with," meanwhile, mean connecting or relating objects, items, etc.

### System Topology Overview

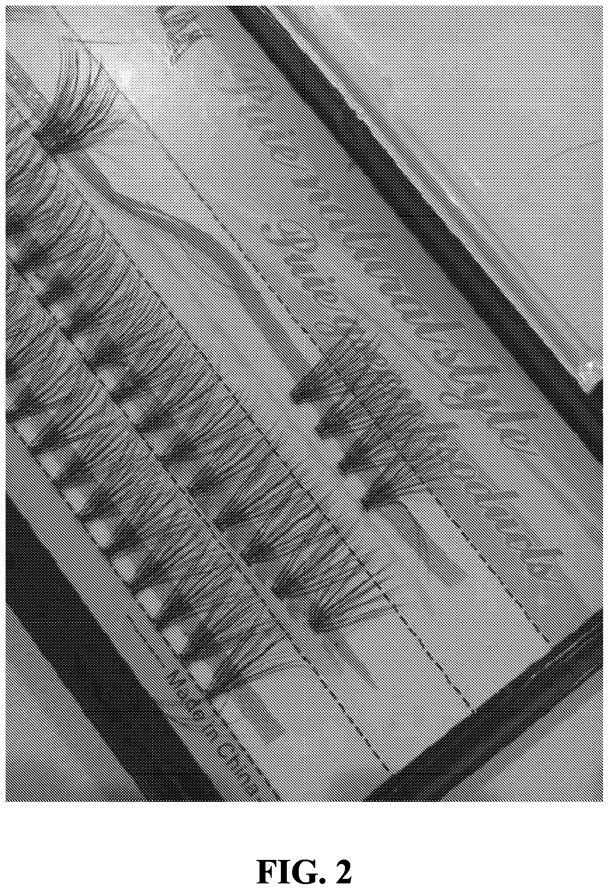

**FIG. 2** depicts clusters of artificial lashes that can be used by professional lash technicians and cosmeticians. Each cluster of artificial lashes includes multiple artificial hairs that consist of natural materials (e.g., silk or authentic mink hair) or synthetic materials (e.g., acrylic resin, PBT, or synthetic mink hair made of polyester).

Clusters of artificial hairs typically include 10 to 30 hairs that are heated (e.g., as part of a hot melt process) and then secured to one another. For example, in some embodiments linear artificial lashes are heated at one end such that they begin to fuse to one another at that end, while in other embodiments linear artificial hairs are heated near a central point and folded underneath one another.

In some embodiments, some or all of the artificial hairs within a cluster may be tied to a support thread (i.e., knotted). The artificial hairs may be tied by any such means, such as a slip knot that prevents horizontal spreading of the cluster.

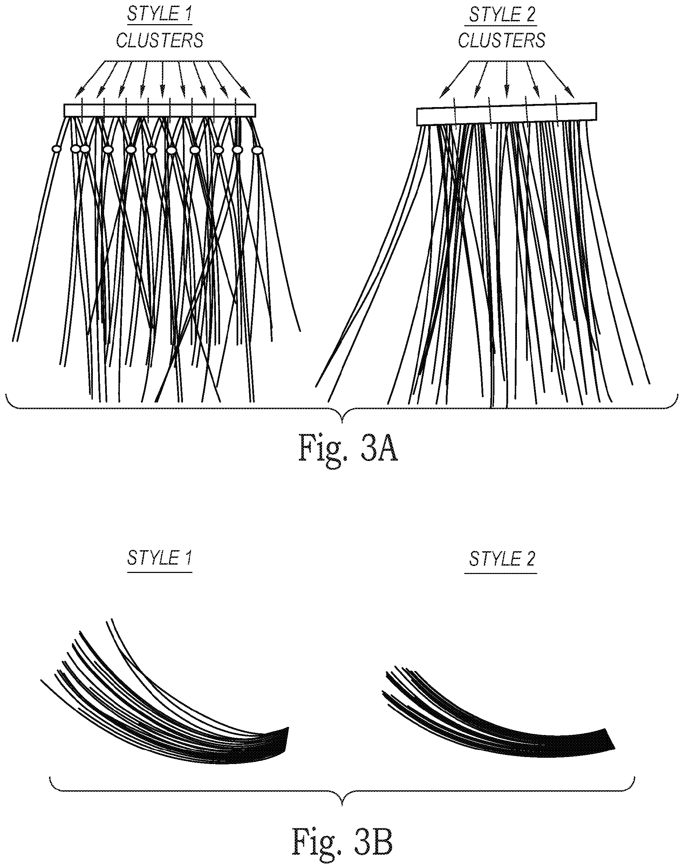

**FIG. 3A** depicts how multiple clusters of artificial lashes can be connected to form a bundle (also referred to as a "lash fusion"). More specifically, the lash fusion can include multiple clusters that are fused together near the base to form a straight line of artificial hairs that can be applied along the upper tightline.

For example, the multiple clusters can be fused together (e.g., via a heat seal process) approximately 1-5 mm above the base via crisscrossing artificial hairs. In some embodiments, the multiple clusters are fused together approximately 1.5-2.5 mm above the base. Adjacent clusters can be secured to one another when the intersecting portions of the crisscrossing artificial hairs are fused together. Such a technique allows a set of multiple lash fusions to appear seamless and blend in with an individual's natural lashes.

The intersecting portions of the crisscrossing artificial hairs could also be connected using an adhesive (i.e., rather than being fused together via a hot melt process). In such embodiments, the multiple clusters may be exposed to a curing assembly (e.g., a heater, dryer, or light source) that causes the adhesive to solidify. Artificial lashes made of natural materials (e.g., human or authentic mink hair) are typically connected using a glue or other adhesive rather than through the hot melt process.

A lash fusion could include 3-10, 3-7, 5-10, 5-7, or 4-6 clusters. Accordingly, a lash fusion could include 30-90 individual artificial hairs. Here, for example, a first style of lash fusion includes nine clusters, while a second style of lash fusion includes five clusters.

Note, however, that both styles could include the same number of artificial lashes. For example, the first style of lash fusion may include nine clusters of five artificial lashes each, while the second style of lash fusion may include five clusters of nine artificial lashes each. Both styles could also include different numbers of artificial lashes (e.g., the first style may include a higher density of artificial lashes, and thus be more appropriate for placement near the tear duct).

Lash fusions may be 4-8 mm wide, though embodiments are often 5-6 mm wide. This is much wider than conventional clusters (which are 1.5-2 mm wide), and thus provide greater coverage along the eyelid.

**FIG. 3B** is a side view of two different styles of lash fusion. The multiple clusters of each lash fusion can be fused to one another (e.g., during a hot melt process). Such a design provides several advantages over conventional clusters of lash extensions.

For example, because the multiple clusters can be heat sealed to one another, the total height at the base of the lash fusion is only 0.05-0.15 mm. Conventional clusters, meanwhile, use a string at the base to connect the artificial hairs to one another. But the presence of the string causes the total height at the base of the cluster to exceed 0.3 mm (e.g., typically 0.3-0.7 mm).

Moreover, the lash fusions described here have no quantifiable weight. Therefore, the lash fusions can more easily adhere to an individual's natural lashes and remain secured for longer periods of time. Again, the presence of the string causes conventional clusters to have a quantifiable weight that affects how they must be adhered to the individual's natural lashes.

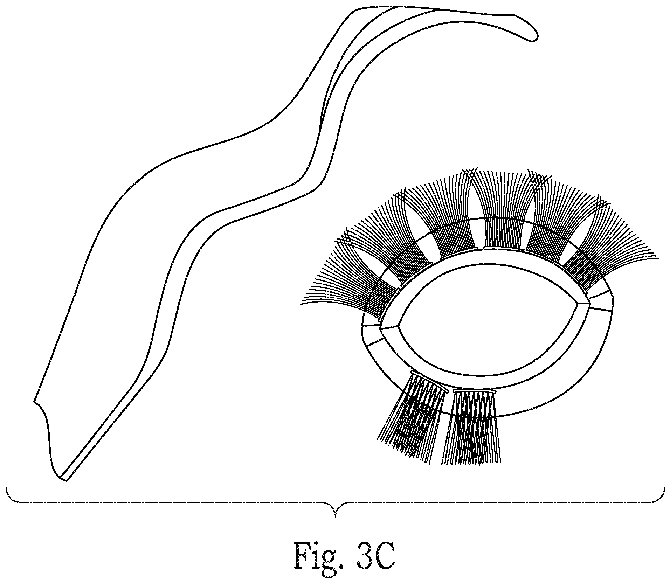

**FIG. 3C** illustrates how a set of multiple lash fusions can be secured to an individual's lashline in a single motion. A set can include multiple lash fusions that are arranged to match the curvature of the upper tightline of an eyelid. For example, multiple lash fusions may be arranged such that the inner ends (i.e., the bases) form a concave shape that substantially complements the universal tightline of nearly any human eye. In some embodiments, sets preferably include five to seven distinct clusters of artificial lashes. The number of lash fusions within each set (as well as the number of clusters within each lash fusion) may be based on the thickness of the artificial hair used, the desired style of the eyelid on which the set is intended to be affixed, the desired lash density (also referred to as "fullness" of the individual's lashes), etc. As shown in **FIG. 3C**, the set of lash fusions is aligned with the tightline rather than the lash line, and then affixed to the underside of the individual's natural lashes. Said another way, the set of lash fusions is applied directly to the underside of the natural lashes rather than to the eyelid.

An adhesive can be applied to the top of each lash fusion in the set, which enables an individual to easily apply the set directly to the natural lashes. The individual responsible for applying the set of lash fusions could be a person who affixes the lash fusions to herself or some other person (e.g., a professional lash technician or a cosmetician). In some embodiments, the adhesive is applied when the lash fusions and/or the set are initially manufactured. Additionally or alternatively, the individual could apply an adhesive before attaching the set of lash fusions to the individual's natural lashes.

The adhesive could be a waterproof (semi-permanent) glue, mascara, or some other co-polymer solution having an adhesive quality. Although latex-based adhesives are generally avoided to avoid irritation of the individual's eyelid (e.g., due to an allergic reaction), adhesives can include various other natural and/or chemical ingredients. Examples of possible adhesives include:
- Arcrylates/ethylhexyl acrylate copolymer, aqua, propylene glycol, ceteareth-25, hydrogenated castor oil, glycerin, phenoxyethanol, 2-bromo-2-nitropropane-1, 3-diol, methylcholoroisothiazolinone, methylisothiazolinone, methylparaben, and optionally a color agent (e.g., black 2 (Cl 77266));
- Polyterpene, styrene/isoprene copolymer, petrolatum, polyisobutene, microcrystalline wax ( cera microcristalina, cire microcrystalline), hydrogenated styrene/methyl styrene/indene copolymer, styrene/VA copolymer, and optionally an antioxidant (e.g., butylated hydroxytoluene (BHT));
- Chlorine dioxide, p-anisic acid, biotin, lavandula angustifolio oil, propylene glycol, water, 2-ethylhexyl acrylate, and optionally a preservative (e.g., benzalkonium chloride); and
- Acrylate copolymer and water.

Those skilled in the art will recognize that many other adhesive compositions are possible and, in fact, may be desirable for individuals having certain allergies, desiring certain fixation duration (also referred to as "permanency" of the lash extensions), etc.

Semi-permanent clusters of lash extensions may be applied with a Federal Drug Administration-approved (FDA-approved) adhesive that achieves a strong bond. Such adhesives generally include cyanoacrylate. Different types of cyanoacrylates (e.g., ethyl, methyl, propyl, butyl, and octyl) have been designed for bonding to different surfaces. For example, adhesives made from methyl-2-cyanoacrylateare are designed to bond a smooth surface (e.g., the lash extension) to a porous surface (e.g., the natural eyelash), but not on the skin as it may cause irritation.

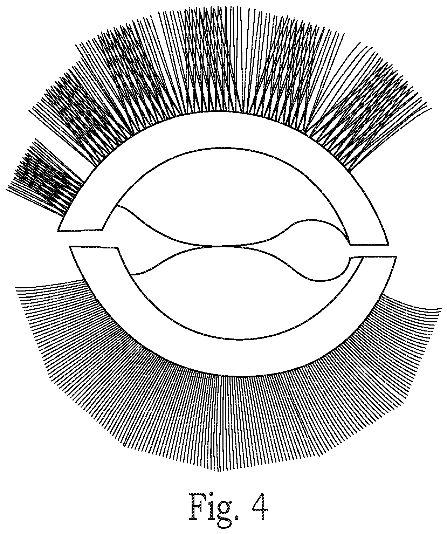

**FIG. 4** illustrates how multiple lash fusions within a set can be positioned in a specified arrangement. While the multiple lash fusions within the set will typically not be connected to one another, the multiple lash fusions can be arranged such that the set substantially complements the shape of an eyelid. More specifically, the curvature of the multiple lash fusions may substantially match the tightline curvature of an average person. Thus, an entire set of lash fusions may become substantially flush with the lash line when the set is arranged proximate to the tightline. Together, the multiple lash fusions form a set of lash extensions that can be collectively applied in a single motion.

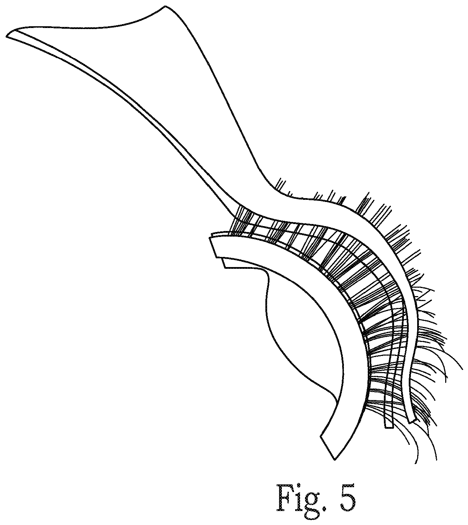

**FIG. 5** depicts how the arrangement of the set of lash extensions enables all of the lash fusions to be simultaneously grasped by an applicator. More specifically, an individual or a healthcare professional, such as a lash technician or cosmetician, can grasp an entire set of lash extensions using the applicator and simultaneously apply the entire set of lash extensions to the individual's natural eyelashes in a single motion.

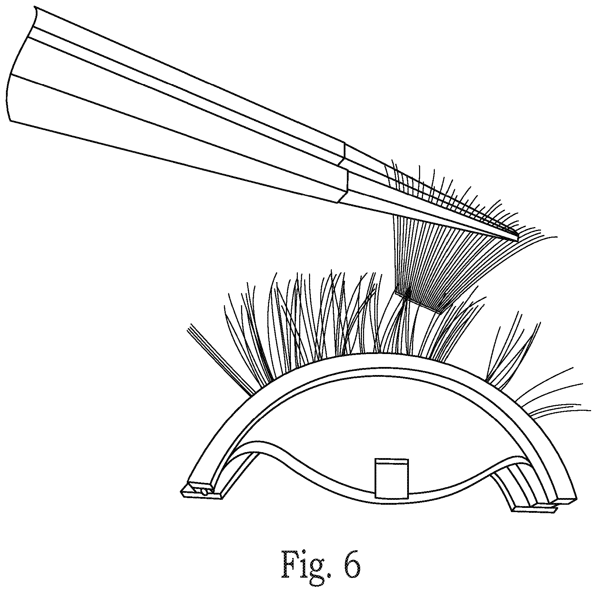

**FIG. 6** depicts how the set of lash fusions can be placed underneath an individual's natural lashes, where the plastic represents the individual's eyelid. As further described below, an adhesive is applied to the top of each lash fusion in the set of lash extensions. Consequently, the set of lash extensions can be applied directly to the underside of the individual's natural lashes proximate to the tightline, rather than to the eyelid above the lash line.

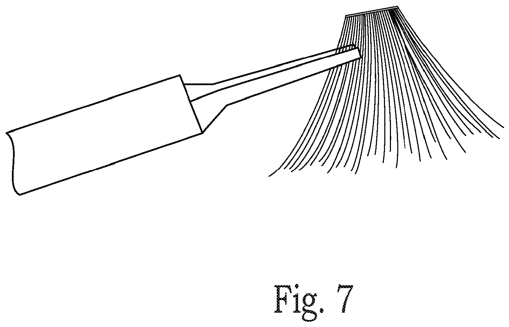

**FIG. 7** depicts how an adhesive can be applied to the top of an entire set of lash extensions or to the lash fusions that make up the set. Additionally or in an alternative that is not the invention, an adhesive could be applied to the individual's natural lashes. The adhesive applied to the artificial lash extensions may the same adhesive applied to the individual's natural lashes or a different adhesive.

Such a technique enables the individual to easily apply the set of lash extensions directly to the underside of the individual's natural lashes proximate to the tightline, rather than to the individual's eyelid adjacent to the lash line. While multiple lash fusions are typically arranged with the intention that they be simultaneously grasped and applied to the individual's natural lashes, the individual could also individually apply the lash fusions.

The adhesive could be a semi-permanent glue or mascara. In some embodiments, the adhesive includes an oil-soluble polymer or a water-soluble polymer that helps to enhance adhesion and substantivity of the artificial lash extensions to the individual's natural eyelashes. The adhesive may be a waterproof formulation that allows the set of lash extensions to remain affixed to the individual's natural lashes for longer periods of time (e.g., days, weeks, or months).

Although latex-based adhesives are generally avoided to avoid irritation of the individual's eyelid (e.g., due to an allergic reaction), adhesives can include various other natural ingredients (e.g., sugar or honey) and/or chemical ingredients. For example, copolymer is often a main ingredient in many adhesive formulations. The adhesive could be a commercially-available adhesive for conventional lash extensions or a specialized composition for use with the set of lash extensions described herein. The adhesive could be clear or colored (e.g., milky white or black to emulate mascara).

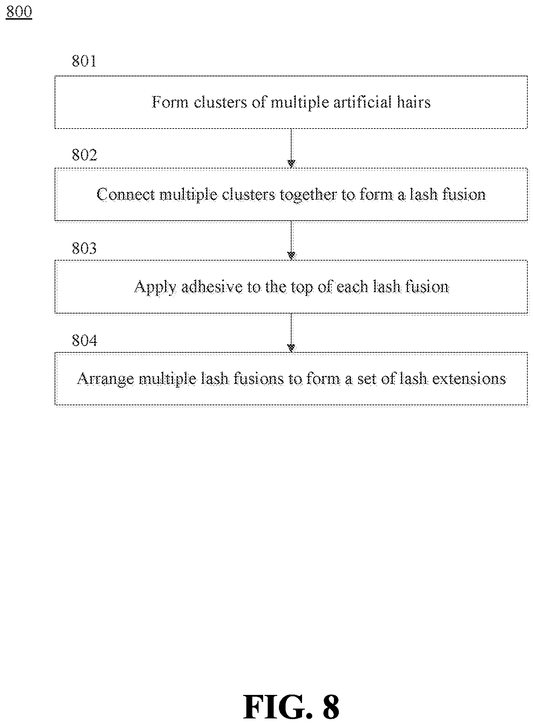

**FIG. 8** depicts a flow diagram of a process 800 for manufacturing a lash fusion including multiple clusters of artificial lashes. Clusters of artificial lashes are initially formed using, for example, a hot melt method in which artificial hairs are heated and connected to one another (step 801). In some embodiments, linear artificial hairs are heated at one end such that they begin to fuse to one another at that end, while in other. In other embodiments, linear artificial hairs are heated near a central point and folded proximate to the central point (i.e., so that a single artificial hair appears as two artificial lashes). Artificial hairs can then be overlapped (e.g., near the fused end or central fold) to form a cluster.

The hot melt method requires that the multiple artificial hairs be heated to a temperature that is sufficient to cause the individual lashes to begin to melt. For example, artificial hairs made of PBT could be heated to approximately 55-110°C at one end during a heat seal process (during which the heated ends begin to fuse to one another). Note, however, that clusters could include artificial hairs that consist of natural materials (e.g., silk or authentic mink hair) or synthetic materials (e.g., acrylic resin, PBT, or synthetic mink hair made of polyester). While clusters may include 10 to 90 artificial hairs, most clusters include 10 to 30 artificial hairs.

Multiple clusters can then be connected together to form a lash fusion (step 802). More specifically, the lash fusion can include multiple clusters that are fused together near one end (i.e., the base) to form a straight line of artificial hairs that can be placed underneath an individual's natural lashes.

For example, the multiple clusters could be connected together using a hot melt method substantially similar to the hot melt method used to form the individual clusters. As noted above, the hot melt method requires that the multiple clusters be heated to a temperature that is sufficient to cause the individual lashes to begin to melt. Thus, clusters made of PBT could be heated to approximately 55-110°C (e.g., 65°C) near one end. For example, the clusters could be heated approximately 1.5-2.5 mm above the base. As the individual artificial hairs begin to melt, the multiple clusters will connect to one another near the base to form a straight line of artificial hairs, thereby forming a lash fusion.

As another example, the multiple clusters could be connected together using a glue or some other adhesive composed of various substances. In such embodiments, the clusters may be exposed to a curing assembly (e.g., a heater, dryer, or light source) that causes the adhesive to solidify. Thus, after multiple clusters have been formed (e.g., via a hot melt process), the multiple clusters may be glued to one another to form a lash fusion. Artificial lashes made of natural materials (e.g., human or authentic mink hair) are typically connected using a glue or other adhesive rather than through the hot melt process.

An adhesive (e.g., a pressure-sensitive adhesive) can then be applied to the top of the lash fusion (step 803). The adhesive may enable an individual to subsequently apply the lash fusion directly to the underside of the individual's natural lashes. Additionally or alternatively, the individual could apply an adhesive before applying the lash fusion to the natural lashes.

In some embodiments, multiple lash fusion are positioned in a specified arrangement to form a set of lash extensions (step 804). For example, 4-6 lash fusions could be arranged such that the inner ends (i.e., the bases) of the lash fusions form a concave shape that substantially complements the tightline of an eyelid. While the lash fusions are typically not connected to one another (e.g., are not fused together using heat, an adhesive, etc.), the entire set could be applied to the underside of the individual's natural lashes in a single motion.

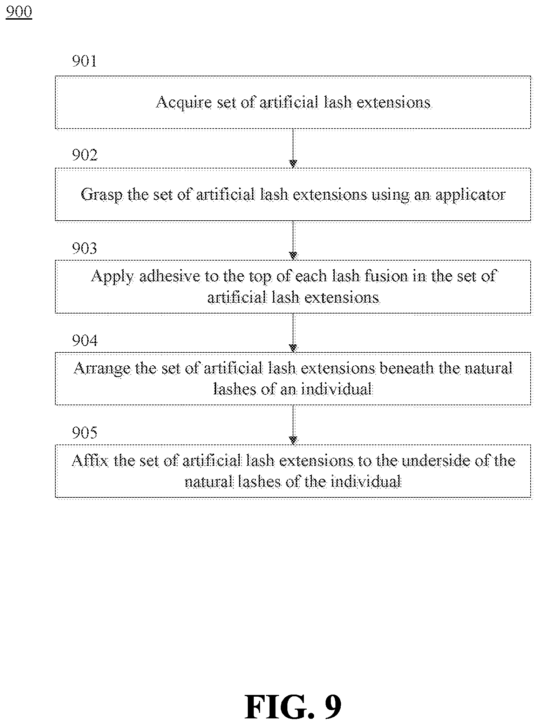

**FIG. 9** depicts a flow diagram of a process 900 for applying a set of artificial lash extensions to an individual's natural lashes. The set of lash extensions is initially acquired by the individual or a healthcare professional, such as a lash technician or cosmetician (step 901). The set of artificial lash extensions can include multiple lash fusions, each of which is comprised of multiple clusters of artificial lashes. The set of artificial lash extensions can then be grasped using an applicator (step 902). The applicator may be designed so that the entire set of artificial lash extensions (i.e., all of the lash fusions) can be seized and removed (e.g., from a surface to which the set of artificial lash extensions are attached) in a single motion.

In some embodiments an adhesive is applied to the top of each lash fusion in the set of artificial lash extensions (step 903), while in other embodiments an adhesive is applied to the top of each lash fusion in the set of artificial lash extensions during the manufacturing process. The adhesive could be, for example, a waterproof glue or mascara. The set of artificial lash extensions can then be arranged proximate to the tightline beneath the individual's natural lashes (step 904) and affixed to the underside of the individual's natural lashes (step 905), rather than to the individual's eyelid above the lash line.

Unless contrary to physical possibility, it is envisioned that the steps described above may be performed in various sequences and combinations. For instance, an adhesive could be applied to the individual clusters before or after the clusters are formed into lash fusions. Other steps could also be included in some embodiments.

### Remarks

The foregoing description of various embodiments of the claimed subject matter has been provided for the purposes of illustration and description. It is not intended to be exhaustive or to limit the claimed subject matter to the precise forms disclosed. Many modifications and variations will be apparent to one skilled in the art. Embodiments were chosen and described in order to best describe the principles of the invention and its practical applications, thereby enabling those skilled in the relevant art to understand the claimed subject matter, the various embodiments, and the various modifications that are suited to the particular uses contemplated.

## Claims

1. A method of applying a set of lash extensions to a subject, the method comprising:
obtaining the set of lash extensions including multiple separate lash fusions (901), each lash fusion comprising multiple clusters of artificial eyelashes, wherein the multiple clusters of artificial eyelashes are fused together at a base to form a straight line of artificial eyelashes;
grasping the multiple lash fusions using an applicator (902);
applying an adhesive to a top side of each lash fusion of the set of lash extensions (903);
arranging the set of lash extensions via the applicator proximate to an underside of natural eyelashes and proximate to a tightline of an eyelid of the subject (904); and
affixing the set of lash extensions only to the underside of the natural eyelashes of the subject such that a top side adheres to the underside of the natural eyelashes via the adhesive (905).

2. The method as claimed in claim 1, wherein each of the artificial eyelashes in a cluster are heat fused to each other at an end of each artificial eyelash in the cluster.

3. The method as claimed in claim 1 or 2, wherein grasping the multiple lash fusions further comprises: grasping via the applicator the multiple separate lash fusions arranged to match a curvature of the tightline of the eyelid.

4. The method as claimed in any preceding claim, wherein each cluster of artificial eyelashes includes at least 10 hairs and no more than 20 hairs.

5. The method as claimed in claim 4, wherein each lash fusion of the multiple lash fusions includes at least 30 hairs and no more than 90 hairs.

6. The method as claimed in claim 4, wherein the set of lash extensions includes at least 150 hairs and no more than 360 hairs.

7. The method as claimed in any preceding claim, wherein artificial eyelashes are distributed along a length of the set of lash extensions at a substantially constant density.

8. The method as claimed in any of claims 1 to 6, wherein the artificial eyelashes are configured to be more densely populated in certain areas of the tightline of the eyelid.

9. The method as claimed in any preceding claim, wherein the adhesive comprises cyanoacrylate.

10. The method as claimed in any preceding claim, wherein the adhesive is applied to the top side of each lash fusion during manufacture of said lash fusion.

11. The method as claimed in any preceding claim, wherein the artificial eyelashes are comprised of a synthetic material, and wherein the synthetic material is polybutylene terephthalate (PBT).

## Patentansprüche

1. Verfahren zum Anbringen eines Satzes Wimpernverlängerungen an einem Subjekt, wobei das Verfahren Folgendes umfasst:
Erhalten eines Satzes von Wimpernverlängerungen, der mehrere separate Wimpernbüschel (901) einschließt, wobei jeder Wimpernbüschel mehrere Kränze künstlicher Wimpern umfasst, wobei die mehreren Kränze künstlicher Wimpern an einer Basis miteinander verschmolzen sind, um eine gerade Linie künstlicher Wimpern zu bilden;
Greifen der mehreren Wimpernbüschel unter Verwendung eines Applikators (902);
Aufbringen eines Klebstoffs auf eine Oberseite jedes Wimpernbüschels des Satzes von Wimpernverlängerungen (903);
Anordnen des Satzes von Wimpernverlängerungen mittels des Applikators in der Nähe einer Unterseite von natürlichen Wimpern und in der Nähe eines Lidrands eines Augenlids des Subjekts (904); und
Fixieren des Satzes von Wimpernverlängerungen nur an der Unterseite der natürlichen Wimpern des Subjekts, sodass eine Oberseite mittels des Klebstoffs (905) an der Unterseite der natürlichen Wimpern haftet.

2. Verfahren nach Anspruch 1, wobei jede der künstlichen Wimpern in einem Kranz an einem Ende jeder künstlichen Wimper in dem Kranz durch Wärme miteinander verschmolzen wird.

3. Verfahren nach Anspruch 1 oder 2, wobei das Greifen der mehreren Wimpernbüschel ferner Folgendes umfasst: Greifen der mehreren separaten Wimpernbüschel, die so angeordnet sind, dass sie mit einer Krümmung des Lidrands des Augenlids übereinstimmen, mittels des Applikators.

4. Verfahren nach einem der vorhergehenden Ansprüche, wobei jeder Kranz künstlicher Wimpern mindestens 10 Haare und nicht mehr als 20 Haare einschließt.

5. Verfahren nach Anspruch 4, wobei jeder Wimpernbüschel der mehreren Wimpernbüschel mindestens 30 Haare und nicht mehr als 90 Haare einschließt.

6. Verfahren nach Anspruch 4, wobei der Satz von Wimpernverlängerungen mindestens 150 Haare und nicht mehr als 360 Haare einschließt.

7. Verfahren nach einem der vorhergehenden Ansprüche, wobei künstliche Wimpern entlang einer Länge des Satzes von Wimpernverlängerungen mit einer im Wesentlichen konstanten Dichte verteilt sind.

8. Verfahren nach einem der Ansprüche 1 bis 6, wobei die künstlichen Wimpern so konfiguriert sind, dass sie bestimmte Bereiche des Lidrands des Augenlids dichter ausfüllen.

9. Verfahren nach einem der vorhergehenden Ansprüche, wobei der Klebstoff Cyanacrylat umfasst.

10. Verfahren nach einem der vorhergehenden Ansprüche, wobei der Klebstoff auf die Oberseite jedes Wimpernbüschels während des Herstellens des Wimpernbüschels aufgebracht wird.

11. Verfahren nach einem der vorhergehenden Ansprüche, wobei die künstlichen Wimpern aus einem synthetischen Material bestehen, und wobei das synthetische Material Polybutylenterephthalat (PBT) ist.

## Revendications

1. Procédé d'application d'un ensemble d'extensions de cils sur un sujet, le procédé comprenant :
l'obtention de l'ensemble d'extensions de cils incluant plusieurs fusions de cils séparées (901), chaque fusion de cils comprenant plusieurs grappes de cils artificiels, dans laquelle les plusieurs grappes de cils artificiels sont fusionnées les uns aux autres à une base pour former une ligne droite de cils artificiels ;
la préhension des plusieurs fusions de cils à l'aide d'un applicateur (902) ;
l'application d'un adhésif sur une face supérieure de chaque fusion de cils de l'ensemble d'extensions de cils (903) ;
la disposition de l'ensemble d'extensions de cils à l'aide de l'applicateur à proximité d'une face inférieure de cils naturels et à proximité d'une ligne serrée d'une paupière du sujet (904) ; et
la fixation de l'ensemble d'extensions de cils uniquement sur la face inférieure des cils naturels du sujet de manière à ce qu'une face supérieure adhère à la face inférieure des cils naturels *via* l'adhésif (905).

2. Procédé selon la revendication 1, dans lequel chacun des cils artificiels dans une grappe sont soudés à la chaleur les uns aux autres au niveau d'une extrémité de chaque cil artificiel dans la grappe.

3. Procédé selon la revendication 1 ou 2, dans lequel la préhension des plusieurs fusions de cils comprend en outre : la préhension à l'aide de l'applicateur des plusieurs fusions de cils séparées disposées de manière à se conformer à une courbure de la ligne serrée de la paupière.

4. Procédé selon l'une quelconque des revendications précédentes, dans lequel chaque grappe de cils artificiels inclut au moins 10 poils et pas plus de 20 poils.

5. Procédé selon la revendication 4, dans lequel chaque fusion de cils des plusieurs fusions de cils inclut au moins 30 poils et pas plus de 90 poils.

6. Procédé selon la revendication 4, dans lequel l'ensemble d'extensions de cils inclut au moins 150 poils et pas plus de 360 poils.

7. Procédé selon l'une quelconque des revendications précédentes, dans lequel des cils artificiels sont répartis le long d'une longueur de l'ensemble d'extensions de cils à une densité sensiblement constante.

8. Procédé selon l'une quelconque des revendications 1 à 6, dans lequel les cils artificiels sont configurés pour être plus densément peuplés dans certaines zones de la ligne serrée de la paupière.

9. Procédé selon l'une quelconque des revendications précédentes, dans lequel l'adhésif comprend du cyanoacrylate.

10. Procédé selon l'une quelconque des revendications précédentes, dans lequel l'adhésif est appliqué sur la face supérieure de chaque fusion de cils lors de la fabrication de ladite fusion de cils.

11. Procédé selon l'une quelconque des revendications précédentes, dans lequel les cils artificiels sont constitués d'un matériau synthétique, et dans lequel le matériau synthétique est du polytéréphtalate de butylène (PBT).
